Europäisches Patentamt

**European Patent Office**

Office européen des brevets

Veröffentlichungsnummer: **0 309 647**

**A1**

## EUROPÄISCHE PATENTANMELDUNG

Anmeldenummer: 88107432.2

Anmeldetag: 09.05.88

Int. Cl.⁴ **E04D 11/00**

Priorität: 26.08.87 DE 3728468

Veröffentlichungstag der Anmeldung:
**05.04.89 Patentblatt 89/14**

Benannte Vertragsstaaten:
**AT BE CH DE ES FR GB IT LI LU NL SE**

Anmelder: **Firma Carl Freudenberg**
**Höhnerweg 4**
**D-6940 Weinheim/Bergstrasse(DE)**

Erfinder: **Heckel, Klaus, Dr.**
**Am Wetzelsberg 6**
**D-6946 Gorxheimertal(DE)**
Erfinder: **Graab, Gerhard, Dr.**
**Nibelungenring 41**
**D-6800 Mannheim 24(DE)**
Erfinder: **Butscher, Alfons**
**Carl-Orff-Strasse 37**
**D-6943 Birkenau(DE)**

Vertreter: **Weissenfeld-Richters, Helga, Dr.**
**Höhnerweg 2-4**
**D-6940 Weinheim/Bergstrasse(DE)**

(54) **Tragschicht für eine Dachbegrünung.**

(57) Eine Tragschicht für die Dachbegrünung, umfassend eine aus ebenem Material tiefgezogene, flüssigkeitsundurchlässige Kunststoffolie (1), die über die Oberfläche verteilte, regelmäßig wiederkehrende, napfartige Einstülpungen (2) aufweist, sowie Abflußlöcher (4) für die Ableitung überschüssigen Wassers. Die Einstülpungen (2) sind mit einem formbeständigen Speichermaterial (9) gefüllt und mit der Oberseite der Kunststoffolie (1) ist eine kontinuierlich durchgehende Filterschicht (6) aus ebenem Fasermaterial verklebt. Die gegenseitige Berührungsfläche zwischen der Filterschicht (6) und der Kunststoffolie (1) beträgt 40 bis 60% der Gesamtfläche und die Abflußlöcher (4) sind in einem Abstand von der Filterschicht (6) in Eintiefungen (3) der Kunststoffolie (1) angeordnet.

EP 0 309 647 A1

## Tragschicht

Die Erfindung betrifft eine Tragschicht nach dem Oberbegriff von Anspruch 1.

Eine solche Tragschicht befindet sich im Handel. Die dazugehörige Kunststoffolie ist von plattenartiger Steife und nicht rollbar, was wegen des Transportproblems kleinformatige Größen bedingt und damit einen erheblichen Arbeitsaufwand bei der Verlegung. Dieser wird weiter vergrößert durch die Notwendigkeit, die enthaltenen Komponenten sämtlich in voneinander unabhängigen Arbeitsvorgängen aufbringen zu müssen, nämlich in einem ersten Arbeitsschritt die eigentliche Kunststoffolie, in einem zweiten Arbeitsschritt das Speichermaterial und in einem dritten Arbeitsschritt die Filterschicht. Auch lassen die Formbeständigkeit und die Dränagewirkung insbesondere nach längerem Gebrauch zu wünschen übrig. Die Dränageöffnungen sind von kleinem Querschnitt und so angeordnet, daß sich eine gegenseitige Berührung zwischen ihrer Mündung und der Filterschicht ergibt.

Der Erfindung liegt die Aufgabe zugrunde, eine solche Tragschicht derart weiterzuentwickeln, daß sich bei einer vereinfachten Möglichkeit der Verlegung auch im langfristigen Gebrauch keine nennenswerte Veränderung der Formbeständigkeit und insbesondere der Dränagewirkung ergibt.

Diese Aufgabe wird erfindungsgemäß bei einer Tragschicht der eingangs genannten Art mit den kennzeichnenden Merkmalen von Anspruch 1 gelöst. Auf vorteilhafte Ausgestaltungen nehmen die Ansprüche 2 bis 10 Bezug.

Die erfindungsgemäße Tragschicht unterscheidet sich von der vorbekannten Ausführung dadurch, daß die Kunststofffolie und die Filterschicht verklebt sind und gemeinsam das in den Einstülpungen enthaltene Speichermaterial anliegend umschließen. Dieses besteht aus einem unnachgiebigen Material, vorzugsweise aus Blähton, dessen außenliegende Partikel vor der Verlegung lose aneinander und an der Kunststoffolie bzw. Filterschicht anliegen. Letztere bestehen aus zähen Materialien mit einer geringen Dehnbarkeit, wodurch die Partikel nach dem Aufbringen des Erdreichs relativ verschoben werden können in Positionen, aus denen weitere Verlagerungen auch bei hohen Belastungen nicht mehr möglich sind. Sowohl die letztlich erreichte Formbeständigkeit als auch Tragfähigkeit ist daher ausgezeichnet. Die einzelnen Partikel sind zweckmäßig von unterschiedlicher Größe und Gestalt, was in Verbindung mit der großen Härte und Rauhigkeit der Oberfläche bereits unter Zugrundelegung des Eigengewichts eine Reduzierung der anfänglichen Relativverlagerungen bedingt. Darüberhinaus kann die diesbezügliche Gefahr bei der erfindungsgemäßen Tragschicht noch mehr reduziert werden durch eine spezielle Dimensionierung der Ausstülpungen.

Die Ausstülpungen können bei kreisförmiger Grundfläche und im wesentlichen säulenförmiger Gestalt einen Durchmesser haben, der es zuläßt, wenigstens drei Partikel auf dem Boden zu verteilen und nicht mehr als vier Partikel gleicher Größe in senkrechter Richtung übereinander. Die gegenseitige Zuordnung der einzelnen Partikel ist in diesem Falle besonders stabil und gewährleistet die Erzielung einer guten Tragfähigkeit. Dabei ist es von besonderem Vorteil, daß die mechanische Belastung der Folie und der Filterschicht besonders gering ist. In beiden Fällen lassen sich daher die Flächengewichte der verwendeten Materialien im Vergleich zu den bekannten Ausführungen deutlich reduzieren.

Die Steifigkeit der fertigen Tragschicht ist dementsprechend ebenfalls vermindert; sie kann dadurch aufgerollt werden, was für die Verlegung von großem Vorteil ist. Die gegenseitige Berührungsfläche zwischen der Kunststofffolie und der Filterschicht soll 40 bis 60% der Gesamtfläche betragen, um sicherzustellen, daß einerseits eine ausreichende Haftung und andererseits eine ausreichende Dränagewirkung gewährleistet ist. Letztere vollzieht sich über die Abflußlöcher. Diese sind im Bereich der Eintiefungen und folglich in einem Abstand von der Filterschicht angeordnet. Sie können daher hinsichtlich ihres Querschnittes groß dimensioniert sein, was Verstopfungen ausschließt und im langfristigen Gebrauch eine gute Dränagewirkung gewährleistet.

Die Filterschicht liegt auf der Oberseite der Kunststofffolie und im Bereich der Einstülpungen auf dem darin enthaltenen Speichermaterial auf. Sie ist mit der Kunststofffolie in den einander berührenden Flächenbereichen zweckmäßig durchgehend verklebt, was der aus einem Fasermaterial bestehenden Filterschicht eine erhöhte Formbeständigkeit verleiht und die Querströmung überschüssigen Wassers in Richtung der Einstülpungen bzw. Eintiefungen begünstigt. Auch im Bereich der unmittelbaren Verklebungszonen werden dadurch Übernässungen des auflastenden Erdreiches zuverlässig vermieden. Auch in Hinblick auf diesen Effekt soll die gegenseitige Berührungsfläche zwischen der Filterschicht und der Kunststoffolie zweckmäßig 45 bis 55% der Gesamtfläche betragen. Die Filterschicht kann aus einem eigenfesten Faservlies bestehen, zweckmäßig aus einem solchen aus verrottungsfesten, polyolefinischen Fasern.

Die der Wasserableitung dienenden Eintiefungen haben einen sich parallel zu der Filterschicht erstreckenden Boden, der von den Abflußlöchern senkrecht durchdrungen ist. Ein Rückstauen überschüssigen Wassers in den Eintiefungen ist dadurch unter normalen Bedingungen weitestgehend ausgeschlossen.

Zweckmäßig haben die Eintiefungen eine größere Querschnittsfläche als die Abflußlöcher. Die Zuführung überschüssigen Wassers aus der Filterschicht zu den Abflußlöchern wird dadurch begünstigt.

Des weiteren kann es vorgesehen werden, daß jeder Einstülpung wenigstens eine Eintiefung zugeordnet ist und daß die Einstülpungen und die Eintiefungen ineinander übergehend ausgebildet sind. In den Einstülpungen bzw. dem darin enthaltenen Speichermaterial sich ansammelndes Wasser, welches das Niveau des Bodens der Eintiefungen übersteigt, wird dadurch in zuverlässiger Weise durch die Abflußlöcher abgeleitet, so daß die Gefahr einer Übernässung des auflastenden Erdreiches nicht gegeben ist. Dennoch ist die Speicherkapazität der erfindungsgemäßen Tragschicht erheblich und gestattet unter mitteleuropäischen Klimabedingungen die Überbrückung langer Trockenzeiten.

Die Kunststoffolie und die an sich bereits eigenfeste Filterschicht können durchgehend verklebt sein, was dem so erhaltenen Verbund eine besonders große Stabilität verleiht. Die Tragfähigkeit ist dementsprechend erhöht und kann das Befahren mit leichten Fahrzeugen ohne weiteres zulassen.

Des weiteren kann es vorgesehen werden, daß die Kunststofffolie mit geradlinig und parallel zueinander verlaufenden, in die Oberfläche eingreifenden, sickenartig ausgebildeten Verformungszonen versehen ist, und daß die Verformungszonen zwischen benachbarter Einstülpungen angeordnet sind. Sie erstrecken sind zweckmäßig bei einer kontinuierlichen Herstellung der Kunststoffolie quer zu deren Richtung, was das Aufrollen in Längsrichtung erleichtert und damit zugleich das Aufrollen der fertigen Tragschicht. Die Ausbringung derselben bei der Abdeckung großer Flächen wird dadurch wesentlich erleichtert.

Neben einer solchen ersten Schar von sich parallel zueinander erstreckenden Verformungszonen kann eine zweite Schar entsprechender Verformungszonen vorhanden sein, die die erstgenannte Schar senkrecht zu deren Richtung durchschneidet. Es ergibt sich in diesem Falle ein ineinander übergehendes System von Hohlräumen, welches gegebenenfalls mit den Eintiefungen und/oder Einstülpungen verbunden sein kann und die Erzielung einer guten Dränagewirkung begünstigt.

Die Einstülpungen der Kunststoffolie können in Hinblick auf eine leichte Herstellbarkeit auch leicht kegelstumpfförmig gestaltet werden mit einem sich nach unten verjüngenden Querschnitt. Auch bei leicht geneigter Verlegung der Tragschicht ist hierdurch ein Kollabieren der Ausstülpungen nicht mehr zu befürchten.

Eine beispielhafte Ausführung der erfindungsgemäßen Tragschicht ist in der als Anlage beigefügten Zeichnung dargestellt. Sie wird nachfolgend näher erläutert. Es zeigen:

Figur 1 eine Tragschicht der erfindungsgemäßen Art in quergeschnittener Darstellung.

Figur 2 eine der in der Tragschicht gemäß Figur 1 verwendeten Kunststoffolie ähnliche Kunststoffolie in der Draufsicht. Einer jeden Ausführung 2 sind in diesem Falle zwei Eintiefungen 3 zugeordnet.

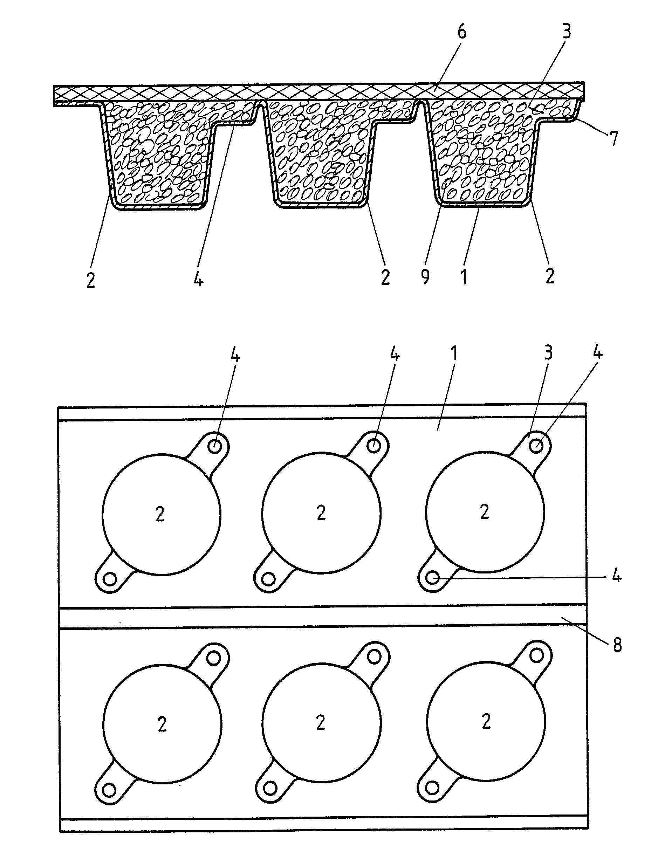

Die in Figur 1 gezeigte Tragschicht wird durch die tiefgezogene Kunststoffolie 1 gebildet, durch die Filterschicht 6 und das Speichermaterial 5, welches in die Einstülpungen 2 der Kunststoffolie 1 eingebettet ist. Die Kunststoffolie 1 und die Filterschicht 6 sind im Bereich der einander berührenden Flächen durch gegenseitige Verklebung unlösbar verbunden.

Sie umschließen gemeinsam das aus Blähtonpartikeln bestehende Speichermaterial 5 unmittelbar anliegend auf allen Seiten. Trotz der vergleichsweise großen Nachgiebigkeit der Filterschicht 6 und der Kunststoffolie 1 wird hierdurch eine ausgezeichnete Tragfähigkeit in senkrechter Richtung erhalten.

Die Kunststoffolie besteht aus Polyethylen und hat eine Dicke von 1,0 mm. Sie ist mit kegelstumpfförmigen Einstülpungen versehen, deren Mittelpunkte auf einem quadratischen Grundraster von 50 mm angeordnet sind. Der Innendurchmesser beträgt am oberen Ende etwa 30 mm und am unteren Ende etwa 23 mm bei einer lichten Höhe von 28 mm. Der maximale Durchmesser der Blähtonpartikel beträgt etwa 9 mm.

Die Ausstülpungen 2 gehen am oberen Ende über in die Eintiefungen 3, deren Boden sich im wesentlichen parallel zu der Filterschicht 6 erstreckt. Er ist jeweils von einem kreisförmig begrenzten Abflußloch 4 senkrecht durchdrungen, dessen Durchmesser 4 mm beträgt bei einem senkrechten Abstand der Mündung von der Filterschicht 6 im unbelasteten Zustand von 3 mm. Aus Starkregenfällen stammendes, überschüssiges Wasser kann sich dadurch in den Ausstülpungen 2 bzw. dem darin enthaltenen Speichermaterial 9 nur bis maximal zur Höhe des Bodens 7 der Eintiefungen 3 anstauen. Eine direkte Benetzung der Filterschicht 6 durch angestautes Wasser wird dadurch zuverlässig vermieden. Dennoch ist durch die Kapillaraktivität des das Speichermaterial 9 bildenden Blähtons in Trockenperioden ein ausreichender Feuchtigkeitstransport nach oben gewährleistet. Auch in diesem Falle kann daher unter mitteleuropäischen Klimabedingungen im Regelfalle auf eine künstliche Bewässerung verzichtet werden.

Zwischen den in Längsrichtung aufeinanderfolgenden Reihen der einzelnen Einstülpungen sind sich in Querrichtung erstreckende, geradlinig und parallel zueinander verlaufende, in die Oberfläche eingreifende, sickenartig ausgebildete Verformungszonen 8 vorgesehen, welche das Aufrollen der Kunststoffolie ebenso wie das Aufrollen der fertigen Tragschicht erleichtern. Die Erzielung einer einfachen Verlegbarkeit wird hierdurch begünstigt.

Mit der Oberseite der vorstehend beschriebenen. tiefgezogenen Kunststoffolie ist die Filterschicht 6 verklebt. Diese besteht aus einem Vliesstoff aus endlosen Polypropylenfasern. Diese sind unmittelbar nach ihrer Herstellung und Bildung in einer feingeschlängelten Struktur vereint und haben einen Titer von durchschnittlich 3,5 dtex. Das Flächengewicht des Vliesstoffes beträgt etwa 80g/m² und die Dicke nach der Fertigstellung etwa 5 mm. Der Vliesstoff ist durch Punktverschweißung verfestigt. Diese wird vorgenommen unter Verwendung eines beheizten Kalanders, bestehend aus einer gravierten Stahlwalze und einer damit in Eingriff stehenden Gummiwalze. Die Gravur der Stahlwalze ist waffelähnlich ausgebildet, wobei die Erhebungen von pyramidenstumpfförmiger Gestalt sind. Die erhaben vorstehenden, ebenen Stirnflächen umfassen 12% der Gesamtfläche, die Temperatur beträgt 145°C, die Anpressung an die Gummiwalze 25 bis 26 kp/cm.

Der damit verfestigte Vliesstoff hat in dicht nebeneinanderliegenden Flächenbereichen einerseits Verschweißungszonen, in denen die die Fasern bildende Substanz vollständig verschmolzen ist und daneben andere Bereiche, in denen die Fasern vollkommen lose aneinander anliegen. Neben einer guten Eigenfestigkeit ergibt sich hierdurch eine gute Filterwirkung, welche das Hindurchtreten von Schwebstoffen in unterhalb des Vliesstoffes liegende Bereiche völlig ausschließt.

Die vorstehend beschriebene Filterschicht ist durch Pulverpunktverschweißung mit der Oberseite der tiefgezogenen Kunststoffolie 1 verbunden und unlösbar vereint. Sie ist ebenso wie diese und der in den Eintiefungen 2 enthaltene Blähton völlig verrottungssicher und inert gegenüber chemischen Einflüssen. Die ausgezeichneten Gebrauchseigenschaften der neuwertigen Tragschicht bleiben dadurch langfristig sicher erhalten.

## Ansprüche

1. Tragschicht für die Dachbegrünung, umfassend eine aus ebenem Material tiefgezogene, flüssigkeitsundurchlässige Kunststoffolie (1). die über die Oberfläche verteilte, regelmäßig wiederkehrende, napfartige Einstülpungen (2) aufweist sowie Abflußlöcher für die Ableitung überschüssigen Wassers, die die Kunststoffolie durchdringen, wobei die Einstülpungen mit einem formbeständigen Speichermaterial (9) gefüllt sind und wobei eine Filterschicht (6) aus ebenem Fasermaterial die Oberseite der Kunststoffolie durchgehend überdeckt, dadurch gekennzeichnet, daß die Kunststoffolie (1) und die Filterschicht (6) verklebt sind, daß die gegenseitige Berührungsfläche zwischen der Filterschicht (6) und der Kunststoffolie (1) 40 bis 60% der Gesamtfläche beträgt und daß die Abflußlöcher (4) in einem Abstand von der Filterschicht (6) in Eintiefungen (3) der Kunststofffolie (1) angeordnet sind.

2. Tragschicht nach Anspruch 1, dadurch gekennzeichnet, daß die Eintiefungen (3) eine größere Querschnittsfläche haben als die Abflußlöcher (4).

3. Tragschicht nach Anspruch 1 bis 2, dadurch gekennzeichnet, daß jeder Einstülpung (2) wenigstens eine Eintiefung (3) zugeordnet ist und daß die Einstülpungen (2) und die Eintiefung (3) ineinander übergehend ausgebildet sind.

4. Tragschicht nach Anspruch 1 bis 3, dadurch gekennzeichnet, daß die Kunststoffolie (1) und die Filterschicht (6) durchgehend verklebt sind.

5. Tragschicht nach Anspruch 1 bis 4, dadurch gekennzeichnet, daß die gegenseitige Berührungsfläche zwischen der Filterschicht (6) und der Kunststoffolie (1) 45 bis 55% der Gesamtfläche beträgt.

6. Tragschicht nach Anspruch 1 bis 5, dadurch gekennzeichnet, daß die Eintiefungen (3) einen Boden (7) haben, der sich parallel zu der Filterschicht (6) erstreckt.

7. Tragschicht nach Anspruch 6, dadurch gekennzeichnet, daß die Abflußlöcher (4) die Kunststoffolie (1) im Bereich des Bodens (7) senkrecht durchdringen.

8. Tragschicht nach Anspruch 1 bis 7, dadurch gekennzeichnet, daß die Kunststoffolie (1) mit geradlinig und parallel zueinander verlaufenden, in die Oberfläche eingreifenden, sickenartig ausgebildeten Verformungszonen (8) versehen ist, und daß die Verformungszonen (8) zwischen benachbarten Einstülpungen (2) angeordnet sind.

9. Tragschicht nach Anspruch 1 bis 8, dadurch gekennzeichnet, daß die von den Verformungszonen (8) umschlossenen Hohlräume und die Eintiefungen (3) und/oder Einstülpungen (2) ineinander übergehend ausgebildet sind.

10. Tragschicht nach Anspruch 1 bis 9, dadurch gekennzeichnet, daß die Kunstoffolie (1) mit Einstülpungen (2) versehen ist, die kegelstumpfförmig ausgebildet sind und einen nach unten verminderten Querschnitt haben.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 045 390 (ZINK) * Seite 10, Absatz 2; Seite 11; Figuren 1-4 * | 1 | E 04 D 11/00 |
| A | KUNSTSTOFFE IM BAU, Band 19, Nr. 1, 1984, Seite 28, München, DE; "Drei patentierte Systeme der Dachbegrünung" * Insgesamt * | 1 | |
| A | CA-A-1 187 306 (SARTOR) * Figuren 1-7 * | 1,4,5 | |
| A | EP-A-0 045 376 (DREFAHL) * Figuren 1-3 * | 1 | |
| A | FR-A-2 544 460 (SCHLUTER) * Seite 4, Zeilen 5-10; Figuren 2,3 * | 1 | |

**RECHERCHIERTE SACHGEBIETE (Int. Cl.4)**

E 04 D

Der vorliegende Recherchenbericht wurde für alle Patentansprüche erstellt

| Recherchenort | Abschlußdatum der Recherche | Prüfer |
|---|---|---|
| DEN HAAG | 17-10-1988 | CHESNEAUX J.C. |